# EUROPÄISCHE PATENTANMELDUNG

(11) **EP 2 696 183 A2**
(43) Veröffentlichungstag der Anmeldung: **12.02.2014**
(21) Anmeldenummer: 13156171.4
(22) Anmeldetag: 21.02.2013
(51) Int. Cl.: G01M 3/18, G01M 3/40, F17D 5/06

(54) **Leckage-Überwachungsvorrichtung und Verfahren zur Leckage-Überwachung in einem Fernwärmerohr**

(30) Priorität: 27.04.2012 DE 102012103747
(71) Anmelder: Stadtwerke Rosenheim GmbH & Co. KG, 83022 Rosenheim (DE)
(72) Erfinder: Neugebauer, Horst, 83135 Schechen (DE); Schober, Wilhelm, 83080 Oberaudorf (DE)
(74) Vertreter: Beckord & Niedlich

(57) **Zusammenfassung**

Leckage-Überwachungsvorrichtung (10) zur dauerhaften Verbindung mit einem wärmeisolierten Fernwärmerohr (1), in dem zwei elektrische Leiter (5) in Längsrichtung des Rohres in der Wärmeisolierung eingelassen sind. Die Überwachungsvorrichtung umfasst eine Messeinheit (9) mit einem ersten Messanschluss (29), an den ein metallisches Innenrohr (4) des Fernwärmerohrs anschließbar ist, und mit einem zweiten Messanschluss (30), an den ein erstes Ende (6) eines ersten elektrischen Leiters der zwei elektrische Leiter anschließbar ist. Ein elektrischer Referenzisolationswiderstand (27) hat einen ersten Widerstandsanschluss (W1) und einem zweiten Widerstandsanschluss (W2). Eine elektrische Widerstandsmesseinheit (11) hat einen ersten Messeingang (15) und einen zweiten Messeingang (16), und ein fernbedienbarer Schalter (13) ist vorgesehen zum wahlweisen Ankoppeln des Referenzisolationswiderstandes (27) oder des ersten Messanschlusses (29) und des zweiten Messanschlusses (30) an die Widerstandsmesseinheit (11). Ferner wird ein Verfahren zur Leckage-Überwachung bereitgestellt.

## Beschreibung

Die Erfindung betrifft eine Leckage-Überwachungsvorrichtung für ein wärmeisoliertes Fernwärmerohr, in dem zwei elektrische Leiter in Längsrichtung des Rohres in der Wärmeisolierung eingelassen sind. Die Erfindung betrifft ferner ein Verfahren zur Leckage-Überwachung.

Fernwärmerohre werden genutzt, um ein zentral erhitztes Wärmemedium, beispielsweise Wasser zu Endverbrauchern zu transportieren. Das Wasser kann typischer Weise eine Temperatur von bis zu 130°C aufweisen. Damit auf dem Transport möglichst wenig Wärme verloren geht, werden die eigentlichen Transportrohre aus Metall, im Allgemeinen Stahlrohre, mit einer Wärmeisolierung versehen, die häufig PU-Schaum (PU - Polyurethan) umfasst. Als äußerer Schutz wird die Wärmeisolierung mit einem Kunststoffmantelrohr umhüllt, hierfür kommt häufig ein PE-Mantel (PE - Polyethylen) zum Einsatz.

Fernwärmerohre werden in der Regel unterirdisch verlegt. Durch Alterungsprozesse, Bauarbeiten oder allgemein Erdbewegungen kann es zu Leckagen kommen. Dabei kann eine Leckage des Innenrohres dazu führen, dass Wärmemedium vom Innenrohr in den PU-Schaum eintritt. Eine Undichtigkeit des PE-Mantels kann dazu führen, dass Erdfeuchtigkeit von außen in den PU-Schaum eintritt. In beiden Fällen führt die Durchfeuchtung des PU-Schaumes zum Lösen von Salzen aus dem PU-Schaum, was zur Ausbildung einer galvanischen Zelle oder auch Batterie führt. Abhängig von der Schaum-Zusammensetzung und dem eindringenden Wasser kann eine "Batteriespannung" von rund einem Volt entstehen. Die sich bildende Batteriesäure bewirkt außerdem eine starke Korrosion des Stahlinnenrohres.

Isolierte Fernwärmerohre werden mit zwei in der Wärmeisolierung in Richtung des Rohrverlaufes geführten elektrischen Leitern versehen. An Verbindungsstellen von zwei Rohrabschnitten können die elektrischen Leiter der aufeinanderfolgenden Rohrabschnitte miteinander verbunden werden, oder die elektrischen Leiter werden nach außen geführt. Ferner ist an den Verbindungsstellen das metallische Innenrohr elektrisch leitend kontaktierbar. Werden die elektrischen Leiter eines Rohres auf einer Seite miteinander elektrisch leitend verbunden, d.h. kurzgeschlossen, so wird eine sogenannte Schleife gebildet, deren Schleifenwiderstand messtechnisch erfassbar ist und in der Regel bei rund 1 bis 100 Ω liegt. Ferner ist ein sogenannter Isolationswiderstand messbar, der zwischen dem Innenrohr und der Schleife liegt. Der Wert des Isolationswiderstandes liegt bei größer etwa 10 MΩ. Eine Abweichung im Schleifenwiderstand deutet auf eine Unterbrechung der Schleife hin. Eine Abweichung im Isolationswiderstand deutet auf Feuchtigkeit hin, die in die Isolierung eingetreten ist, d.h. auf eine Leckage.

Bisher werden diese Widerstände bei der Wartung von Fernwärmerohren in größeren zeitlichen Abständen gemessen, indem Wartungspersonal Verbindungsstellen der Rohre, sogenannte Abschnittsgrenzen aufsucht und die Messungen beispielsweise mit einem Vielfachmessgerät durchführt. Aufgrund des damit verbundenen Aufwandes wird nur selten gemessen und Leckagen erst spät erkannt. Zudem können durch den oben beschriebenen Batterieeffekt die Messungen so verfälscht werden, dass scheinbar korrekte Widerstandswerte gemessen werden, obwohl bereits eine Undichtigkeit vorliegt.

Es ist daher eine Aufgabe der vorliegenden Erfindung, eine Leckage-Überwachungsvorrichtung zur Verfügung zu stellen, mit der eine zuverlässige und schnelle Erkennung von Undichtigkeiten gewährleistet ist.

Diese Aufgabe wird zum einen durch eine Leckage-Überwachungsvorrichtung gemäß Patentanspruch 1 und zum anderen durch ein Verfahren gemäß Patentanspruch 13 gelöst.

Erfindungsgemäß ist die Leckage-Überwachungsvorrichtung zur dauerhaften Verbindung mit einem wärmeisolierten Fernwärmerohr, in dem zwei elektrische Leiter in Längsrichtung des Rohres in der Wärmeisolierung eingelassen sind, geeignet. Die Vorrichtung bleibt also stationär mit dem zu überwachenden Rohrabschnitt verbunden und kann kontinuierlich bzw. in zeitlichen Abständen messen. Die Leckage-Überwachungsvorrichtung ist mit einer Messeinheit ausgerüstet, die einen ersten Messanschluss hat, an den ein metallisches Innenrohr des Fernwärmerohrs anschließbar ist. Ferner ist ein zweiter Messanschluss vorgesehen, an den ein erstes Ende eines ersten elektrischen Leiters der zwei elektrischen Leiter anschließbar ist. Damit liegt der Isolationswiderstand des Fernwärmerohres zwischen den beiden Messanschlüssen, wenn die Leckage-Überwachungsvorrichtung mit dem Fernwärmerohr verbunden ist.

Ferner weist die Überwachungsvorrichtung einen elektrischen Referenzisolationswiderstand mit einem ersten Widerstandsanschluss und einem zweiten Widerstandsanschluss auf. Der Referenzisolationswiderstand kann ein herkömmlicher elektrischer Widerstand sein, der einen Wert aufweist, der in etwa dem erwarteten Isolationswiderstand entspricht. Eine elektrische Widerstandsmesseinheit als Teil der Leckage-Überwachungsvorrichtung hat einen ersten Messeingang und einen zweiten Messeingang. Ein fernbedienbarer Schalter erlaubt das wahlweise Ankoppeln des Referenzisolationswiderstandes oder des ersten Messanschlusses und des zweiten Messanschlusses an die Widerstandsmesseinheit. Fernbedienbar bedeutet, dass der Schalter von einer abgesetzten Einheit aus, beispielsweise über ein Funksignal bedient werden kann. Vorteil eines fernbedienbaren Schalters ist es, dass kein Personal vor Ort sein muss, um den Schalter zu bedienen.

Der fernbedienbare Schalter ermöglicht jederzeit die Umschaltung auf einen definierten Referenzisolationswiderstand und erlaubt damit beispielsweise, die Funktionsfähigkeit der Widerstandsmesseinheit und allgemeiner der Überwachungsvorrichtung zu überprüfen. Die Zuverlässigkeit wird deutlich erhöht, ohne dass Wartungspersonal vor Ort sein muss.

Das erfindungsgemäße Verfahren zur Leckage-Überwachung in einem wärmeisolierten Fernwärmerohr, in dem zwei elektrische Leiter in Längsrichtung des Rohres in der Wärmeisolierung eingelassen sind, umfasst das Messen eines elektrischen Widerstands zwischen einem ersten der zwei elektrischen Leiter und einem metallischen Innenrohr des wärmeisolierten Fernwärmerohrs. Mit anderen Worten wird der Isolationswiderstand im Rohr gemessen. Der Wert des Isolationswiderstands erlaubt Rückschlüsse darauf, ob Feuchtigkeit in die Wärmeisolierung eingedrungen ist, oder nicht.

Erfindungsgemäß erfolgt zudem ein Umschalten auf einen elektrischen Referenzisolationswiderstand in vorgegebenen zeitlichen Abständen und/oder wenn ein Widerstandswert gemessen wurde, der von einem erwarteten Messergebnis abweicht. Dann wird der Referenzisolationswiderstand gemessen.

Ein Umschalten in vorgegebenen zeitlichen Widerständen hat den Vorteil, dass regelmäßig die Funktionstüchtigkeit überprüft wird und eine Fehlfunktion frühzeitig erkannt werden kann. Liegen Widerstandsmesswerte vor, die außerhalb eines erwarteten Bereichs sind, kann durch ein Umschalten gezielt eine Fehlfunktion der Messeinheit ausgeschlossen oder bestätigt werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen einer anderen Anspruchskategorie weitergebildet sein können

Vorteilhafter Weise umfasst die Messeinheit ferner einen dritten Messanschluss, an den ein zweites Ende des zweiten elektrischen Leiters der zwei elektrischen Leiter anschließbar ist. Damit liegt dann zwischen dem zweiten und dem dritten Messanschluss die Schleife, die aus dem ersten elektrischen und dem zweiten elektrischen Leiter gebildet ist, sofern die beiden Leiter an einem entfernten Ende des Rohres elektrisch leitend miteinander verbunden sind. Es ist ein Referenzschleifenwiderstand mit einem dritten Widerstandsanschluss und einem vierten Widerstandsanschluss vorgesehen, wobei der fernbedienbare Schalter wahlweise die beiden Referenzwiderstände oder die drei Messanschlüsse an die Widerstandsmesseinheit ankoppelt. Damit ist die Leckage-Überwachungsvorrichtung um die Möglichkeit der Schleifenwiderstandsmessung erweitert. Auch für diesen anderen Widerstandsmessbereich ist ein entsprechender Referenzwiderstand im etwa gleichen Größenbereich vorgesehen. Der Referenzschleifenwiderstand hat also einen Wert von etwa 10 Ω.

In einer Ausführungsform ist die Widerstandsmesseinheit vollständig galvanisch von den zwei oder drei Messanschlüssen getrennt, wenn der oder die Referenzwiderstände über den Schalter an die Widerstandsmesseinheit angekoppelt sind. Der Schalter ist also so ausgelegt, dass keine elektrisch leitende Verbindung zu den Messanschlüssen, an die die Rohranschlüsse dauerhaft angekoppelt sind, bestehen bleibt. Damit kann der Schalter auch zur Freischaltung dienen. Wenn z.B. Bauarbeiten geplant oder auch Wartungsarbeiten am Fernwärmerohr vorgesehen sind, könnte dies zum einen Auswirkungen auf die Überwachungsvorrichtung haben und zum anderen könnte sich die laufende Widerstandsmessung störend auf etwaige Messungen während der Wartungsarbeiten auswirken. Es ist durch die mögliche Freischaltung nicht mehr notwendig, dass Personal vor Ort die elektrischen Leiter abklemmt. Da der Schalter fernbedienbar ist, kann er z.B. von einer Zentrale aus geschaltet werden. Auch bei einem Gewitter, insbesondere bei freiliegenden Rohren kann über den Schalter eine Freischaltung erfolgen, womit die Leckage-Überwachungsvorrichtung vor Beschädigungen durch Überspannungen zuverlässig geschützt ist.

In einer Ausführungsform umfasst die Leckage-Überwachungsvorrichtung eine Mehrzahl, insbesondere bis zu vier, Messeinheiten, die eine gleichzeitige Überwachung von einer Mehrzahl, insbesondere bis zu vier wärmeisolierten Fernwärmerohren ermöglichen. In einem Fernwärmesystem laufen jeweils ein Rohr für den Vorlauf, d.h. den Hintransport des Wärmemediums zum Endnutzer, und ein Rohr für den Rücklauf, d.h. den Rücktransport des (abgekühlten) Wärmemediums vom Endnutzer weg, parallel. An einer Verbindungsstelle zwischen zwei Rohrabschnitten sind daher vier Rohrteilstücke vorhanden, der sogenannte linke Vorlauf, der rechte Vorlauf, der linke Rücklauf und der rechte Rücklauf. In der hier beschriebenen Ausführungsform können alle vier Rohrteilstücke mit nur einer Leckage-Überwachungsvorrichtung überwacht werden.

In einer weiteren Ausführung umfasst die Leckage-Überwachungsvorrichtung eine Auswerteeinheit zum Bearbeiten von Widerstandsmessergebnissen, die von der Widerstandsmesseinheit gemessen wurden. Bei einer Leckage-Überwachungsvorrichtung, die wie vorstehend beschrieben mehrere Messeinheiten umfasst, genügt dabei eine Auswerteeinheit, da diese die Widerstandsmessergebnisse von einer Mehrzahl, insbesondere bis zu vier, Messeinheiten bearbeiten kann.

In einer besonders bevorzugten Ausführungsform umfasst die Auswerteeinheit ein Funkmodul, welches ein Empfangen und/oder Senden von Daten, insbesondere nach einem Mobilfunkstandard erlaubt. Besonders bevorzugt erlaubt das Funkmodul ein Empfangen und/oder Senden nach einem Kurznachrichtenstandard, beispielsweise SMS (Short Message Standard). Als Mobilfunkstandard kann als Beispiel der GSM-Standard (Global System for Mobile Communications) genutzt werden. GSM ist ein derzeit weit verbreiteter Standard. Damit kann die Leckage-Überwachungsvorrichtung mit einer übergeordneten Einheit kommunizieren, ohne dass eine Kommunikationsleitung notwendig ist. Das Funkmodul ist mit einer Sendeantenne koppelbar, die an die jeweilige Funknetzqualität am geplanten Einsatzort angepasst sein kann.

Die Auswerteeinheit kann z.B. die ermittelten Messwerte in regelmäßigen Abständen oder auf Anforderung über Funk an eine übergeordnete Einheit senden. Die übergeordnete Einheit kann beispielsweise die Messdaten von mehreren Auswerteeinheiten für verschiedene Streckenabschnitte eines Fernwärmerohres empfangen.

Vorteilhafter Weise kann die Auswerteeinheit ein Steuersignal zum Steuern des Schalters abgeben. Dieses Steuersignal kann die Auswerteeinheit selbst zum Beispiel unter Nutzung eines Timers zu vorgebbaren Zeiten generieren. Die Auswerteeinheit kann das Steuersignal auch aufgrund von Auswerteergebnissen generieren, beispielsweise bei nicht plausiblen Messergebnissen. Die Auswerteeinheit kann aber auch über Funk einen Befehl zum Generieren eines Steuersignals für den Schalter empfangen. Letzteres ist insbesondere für die Freischaltefunktion des Schalters interessant. Davon unabhängig kann der Schalter auch direkt über Funk ansteuerbar sein.

In einer Ausführungsform umfasst die Leckage-Überwachungsvorrichtung eine Vorrichtung zur galvanischen Trennung zwischen der oder den Messeinheiten und der Auswerteeinheit. Die Messeinheiten sind vorzugsweise analog ausgeführt. Sie sind, wenn keine Freischaltung vorliegt, in direktem Kontakt mit den Fernwärmerohren und damit ständig elektromagnetischen Störungen, die zu unerwünschten Spannungsspitzen führen können, ausgesetzt. Analoge Baugruppen sind in der Regel jedoch weniger störanfällig, als digitale Baugruppen. Die Auswerteeinheit ist vorteilhafter Weise digital ausgeführt, um eine weitergehende Auswertung der Messergebnisse, Speicherung, usw. zu ermöglichen. Diese Elektronik reagiert wesentlich empfindlicher auf Störspannungen. Deshalb schützt die galvanische Trennung zwischen Messeinheiten und Auswerteeinheit die Auswerteeinheit vor Störeinflüssen von außen. Die Vorrichtung zur galvanischen Trennung kann Optokoppler umfassen. Die Vorrichtung zur galvanischen Trennung kann auch einen Trenntransformator umfassen.

Es ist vorteilhaft, wenn eine Erdung der Messeinheit auf ein Erdpotential des oder der Fernwärmerohre erfolgt. Eine Erdung der Auswerteeinheit kann auf ein Erdpotential einer mit dem Funkmodul gekoppelten Sendeantenne erfolgen. Die Widerstandsmessungen auf den Fernwärmerohren sind vielen Einflüssen unterworfen und es kann leicht zu Fehlmessungen kommen. Eine sorgfältige Erdung ist daher wichtig für die erzielbare Messgenauigkeit.

Die Leckage-Überwachungsvorrichtung umfasst auch einen Spannungsversorgungsanschluss, um die Auswerteeinheit und die Messeinheiten mit elektrischer Energie zu versorgen. Besonders bevorzugt ist eine Vorrichtung zur galvanischen Trennung der Spannungsversorgung von der Auswerteeinheit und der Messeinheit vorgesehen. Die Vorrichtung kann einen Trenntransformator und/oder Optokoppler umfassen. Als Bezugserde kann das Erdpotential der genutzten Spannungsversorgung dienen. Damit sind drei galvanisch getrennte Potentialbereiche vorgesehen: Die Messeinheit ist auf ein Erdpotential der Fernwärmerohre geerdet, die Auswerteeinheit auf ein Erdpotential der Sendeantenne und der Spannungsversorgungsanschluss auf ein Erdpotential der genutzten Spannungsversorgung.

In einer Ausführungsform ist die Auswerteeinheit so gestaltet, dass sie die von der Widerstandsmesseinheit gemessenen Widerstandsmesswerte in vorgegebenen Zeitabständen auswertet und Widerstandsmesswerte verwirft, die außerhalb eines ersten vorgegebenen Werteintervalls liegen. Der Verwurf von nicht plausiblen Messwerten ist bei den besonderen Messbedingungen, die bei Fernwärmerohren herrschen, für die Genauigkeit der Messungen wichtig. Elektromagnetische Störungen können extreme Ausreißer bei den Messwerten hervorrufen, ohne dass in den Fernwärmerohren selbst ein Problem vorliegt. In der Ausführungsform erkennt die Auswerteeinheit selbsttätig, dass hier ein Messfehler aufgrund äußerer Umstände vorliegen muss und verwirft daher den entsprechenden Messwert.

Zusätzlich kann die Auswerteeinheit so gestaltet sein, dass sie aus einer vorgebbaren Anzahl von nicht verworfenen Widerstandsmesswerten einen Widerstandsmittelwert bildet. Der Widerstandsmittelwert wird darauf geprüft, ob er innerhalb eines zweiten vorgegebenen Werteintervalls liegt, das kleiner ist, als das erste vorgegebene Werteintervall. Die Widerstandsmittelwerte können in einem Speicher abspeichert werden. Vorteilhafterweise handelt es sich bei dem Speicher um einen Ringspeicher, in dem die Widerstandsmesswerte eines bestimmten Zeitraums, z.B. zwei Wochen, gespeichert werden können. In anderen Worten, neuere Messwerte verdrängen die ältesten Messwerte aus dem Speicher, ohne dass ein Rücksetzen oder ein regelmäßiges Leeren des Speichers erforderlich wäre. Es stehen immer die letzten Messwerte zur Verfügung.

In einer Ausführungsform ist die Auswerteeinheit so gestaltet, dass sie dann, wenn der Widerstandsmittelwert außerhalb des zweiten vorgegebenen Werteintervalls liegt, ein Schaltsignal an den Schalter abgibt. Der Schalter schaltet damit auf den oder die Referenzwiderstände um, und die elektrische Widerstandsmesseinheit ist nicht mehr an das Fernwärmerohr gekoppelt. Es wird eine Messung des oder der Referenzwiderstände durchgeführt. Liegen die nach dem Umschalten gemessenen Referenzmesswerte innerhalb eines vorgegebenen Referenzwerteintervalls, so wird eine Funknachricht, insbesondere eine SMS (short message service), ausgesendet. Hierdurch kann Wartungspersonal informiert werden, dass am Fernwärmerohr ein Widerstandswert gemessen wurde, der nicht im normalen Bereich liegt, wobei die Messeinheit als solche funktionstüchtig ist, wie die Messung des Referenzwiderstands gezeigt hat. Liegen die nach dem Umschalten gemessenen Referenzmesswerte außerhalb eines vorgegebenen Referenzwerteintervalls, so kann ebenfalls eine Funknachricht, insbesondere eine SMS, ausgesendet werden. Durch diese kann Wartungspersonal informiert werden, dass ein Fehler der Messeinheit vorliegt.

Die Auswerteeinheit kann einen Anschluss zum Verbinden mit einem Datensichtgerät, insbesondere mit einem Bildschirm umfassen. Das erlaubt es dem Wartungspersonal an der Auswerteeinheit selbst Messdaten auszulesen und/oder eine Neukonfiguration der Auswerteeinheit vorzunehmen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine schematische Darstellung eines Fernwärmerohres mit eingelassenen Messdrähten,
Figur 2 einen schematischen Querschnitt durch das Rohr nach Figur 1,
Figur 3 ein stark vereinfachtes Schaltbild eines Teils einer erfindungsgemäßen Leckage-Überwachungsvorrichtung,
Figur 4 eine schematische Darstellung einer Mehrzahl von Streckenabschnitten in einem Fernwärmerohr mit erfindungsgemäßen Leckage-Überwachungsvorrichtungen,
Figur 5 ein detaillierteres Blockschaltbild einer erfindungsgemäßen Leckage-Überwachungsvorrichtung, und
Figur 6 eine vereinfachte schematische Darstellung einer Anordnung einer erfindungsgemäßen Leckage-Überwachungsvorrichtung in einem Schaltschrank.

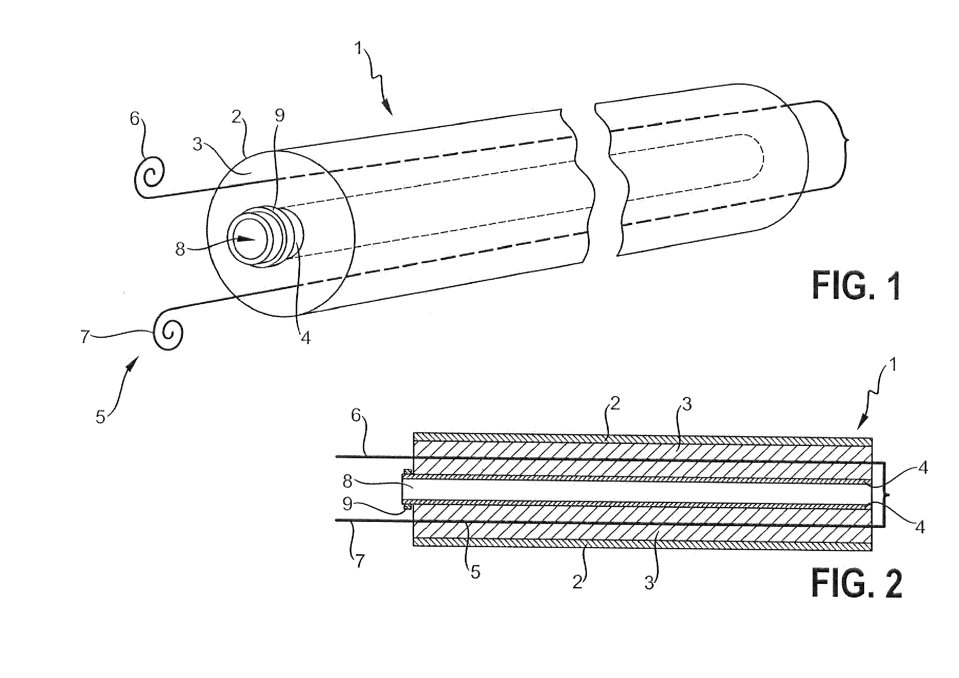

Figur 1 zeigt in einer schematischen perspektivischen Darstellung ein Rohr 1, wie es als Fernwärmrohr zum Einsatz kommt. Ein metallisches Innenrohr 4 ist in der Regel ein Stahlrohr, es kann abhängig vom Einsatzfall aus Edelstahl gefertigt sein. Durch das Innenrohr 4 strömt ein Wärmemedium 8, bei dem es sich um heißes Wasser oder auch Wasserdampf handeln kann. Das Innenrohr 4 ist von einer Wärmeisolierung 3 umgeben. Die Wärmeisolierung kann aus PU-Schaum gebildet sein. Die Wärmeisolierung 3 wird von einem sie umgebenden Außenmantel 2 geschützt. Der Mantel 2 kann aus Kunststoff, beispielsweise aus Polyethylen gebildet sein.

In die Wärmeisolierung 3 eingelassen sind Drähte 5, die in Figur 1 als zu einer Drahtschleife verbunden dargestellt sind. Zunächst ist das Fernwärmerohr 1 mit zwei separaten nicht isolierten Drähten 5 versehen, die in die nichtleitende Wärmeisolierung 3 eingelassen sind. Die Drähte 5 verlaufen in Längsrichtung des Innenrohres 4 und berühren dieses nicht. Der eine der beiden Drähte 5 kann aus Kupfer bestehen, während es sich bei dem zweiten Draht 5 um einen verzinnten Draht handeln kann. Drähte 5 dienen als Messdrähte. Je nach Messkonfiguration, werden die Drähte 5 eines Streckenabschnitts zu einer Schleife verbunden, wie in Figur 1 dargestellt. Es ist auch möglich, die Drähte 5 mehrerer Streckenabschnitte hintereinander zu verbinden, d.h. Kupferdraht mit Kupferdraht und verzinnter Draht mit verzinntem Draht und erst am Ende der mehreren Streckenabschnitte durch einen Zusammenschluss des Kupferdrahtes und des verzinnten Drahtes eine Schleife zu bilden. Die Drähte 5 weisen dann ein freies Drahtende 6 und ein freies Drahtende 7 auf.

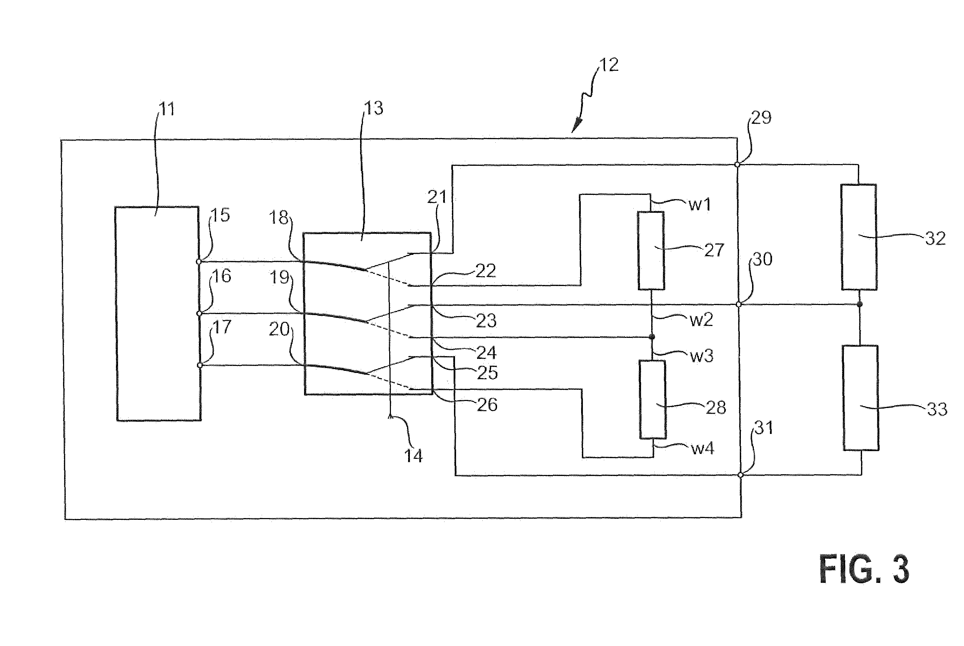

Drahtenden 6 und 7 können an eine erfindungsgemäße Leckage-Überwachungsvorrichtung 10, wie in Figuren 3 bis 6 dargestellt, angekoppelt werden. Das erlaubt die Messung des sogenannten Schleifenwiderstands, der abhängig von den verwendeten Drähten und der Länge des überwachten Rohrabschnitts in der Größenordnung von etwa 100 Ω liegt. Um das Innenrohr 4 kann eine Bandschelle 9 gelegt sein, wie sie auch zur Erdung verwendet wird. Dann kann auch das Innenrohr 4 an die erfindungsgemäße Leckage-Überwachungsvorrichtung 10 angeschlossen werden und zwischen Innenrohr 4 und einem der Drähte 5, bzw. der Drahtschleife kann der sogenannte Isolationswiderstand gemessen werden. Im trockenen Zustand, d.h. wenn kein Leck vorliegt, beträgt der elektrische Isolationswiderstand größenordnungsmäßig etwa 10 MΩ.

Figur 2 zeigt einen schematischen Querschnitt durch das Fernwärmerohr 1. Auch in Figur 2 sind die Drähte 5 zu einer Drahtschleife verbunden dargestellt. Im Stahlinnenrohr 4 strömt das Wärmemedium 8. Die Isolierung 3 umgibt das Innenrohr 4 und der Mantel 2 umgibt die Isolierung 3. Um ein Ende des Innenrohrs 4 liegt eine Bandschelle 9, die über einen Draht an die erfindungsgemäße Leckage-Überwachungsvorrichtung 10 anschließbar ist.

Figur 3 zeigt schematisch eine Messeinheit 12 als Teil einer Ausführungsform der erfindungsgemäßen Leckage-Überwachungsvorrichtung 10, die ein Verständnis der Umschaltung zwischen Fernwärmerohr und Referenzwiderständen erlauben soll. Hierfür sind in der Messeinheit 9 dargestellt eine elektrische Widerstandsmesseinheit 11, ein Schalter 13, ein Referenzisolationswiderstand 27 und ein Referenzschleifenwiderstand 28. Ferner zeigt Figur 3 die zu messenden elektrischen Widerstände im Fernwärmerohr, genauer einen Isolationswiderstand 32 und einen Schleifenwiderstand 33.

Die Messeinheit 9 umfasst einen ersten Messanschluss 29 und einen zweiten Messanschluss 30. Das metallische Innenrohr 4 ist über die Bandschelle 9 an den ersten Messanschluss 29 anschließbar. Ein erstes Ende 6 der Drahtschleife 5 ist an den zweiten Messanschluss 30 anschließbar. Damit liegt der Isolationswiderstand 32 zwischen dem ersten Messanschluss 29 und dem zweiten Messanschluss 30. In der gezeigten Ausführungsform umfasst die Messeinheit 9 ferner einen dritten Messanschluss 31, an den ein zweites Ende 7 der Drahtschleife 5 anschließbar ist. Damit liegt der Schleifenwiderstand 33 zwischen dem zweiten Messanschluss 30 und dem dritten Messanschluss 31. Eine Leckage-Überwachung ist prinzipiell auch möglich, wenn nur der Isolationswiderstand gemessen wird. Der Isolationswiderstand sinkt ab, wenn in die Wärmeisolierung Feuchtigkeit eingedrungen ist. Der Schleifenwiderstand gibt demgegenüber eine Information darüber, ob eine Unterbrechung der Messschleife vorliegt. Eine Unterbrechung der Messschleife kann zu einer fehlerhaften Messung des Isolationswiderstands führen. Der dritte Messanschluss 31 ist daher vorteilhaft, aber für die Erfindung nicht zwingend notwendig.

Der Referenzisolationswiderstand 27 weist einen ersten Widerstandsanschluss W1 und einen zweiten Widerstandsanschluss W2 auf. Er hat einen Wert von etwa 1 MΩ. Der Referenzschleifenwiderstand 28 weist einen dritten Widerstandsanschluss W3 und einen vierten Widerstandsanschluss W4 auf. Der Referenzschleifenwiderstand 28 ist nur notwendig, wenn auch ein dritter Messanschluss 31 vorgesehen ist. Er hat einen Wert von etwa 10 Ω. Der dritte Widerstandsanschluss W3 ist elektrisch mit dem zweiten Widerstandsanschluss W2 gekoppelt.

Die Widerstandsmesseinheit 11 umfasst einen ersten Messeingang 15, einen zweiten Messeingang 16 und einen dritten Messeingang 17. Der dritte Messeingang 17 ist nur notwendig, wenn auch eine Schleifenwiderstandsmessung vorgesehen ist.

Der Schalter 13 umfasst einen ersten Schalteranschluss 18, der mit dem ersten Messeingang 15 verbunden ist, einen zweiten Schalteranschluss 21, der mit dem ersten Messanschluss 29 verbunden ist, und einen dritten Schalteranschluss 22, der mit dem ersten Widerstandsanschluss W1 verbunden ist. Der Schalter 13 ist so gestaltet, dass er abhängig von einem Schaltsignal, dass mit einem Referenzzeichen 14 angedeutet ist, den ersten Schalteranschluss 18 entweder mit dem zweiten Schalteranschluss 21 oder mit dem dritten Schalteranschluss 22 verbindet. Der Schalter 13 ist fernbedienbar. Das Schaltsignal 14 kann von einer anderen Einheit der Leckage-Überwachungsvorrichtung kommen. Das Schaltsignal 14 kann über Funk an die Leckage-Überwachungsvorrichtung 10 übertragen werden.

Der Schalter 13 umfasst ferner einen vierten Schalteranschluss 19, der mit dem zweiten Messeingang 16 verbunden ist, einen fünften Schalteranschluss 23, der mit dem zweiten Messanschluss 30 verbunden ist, und einen sechsten Schalteranschluss 24, der mit dem zweiten Widerstandsanschluss W2 verbunden ist. Der Schalter 13 ist so gestaltet, dass er abhängig von dem Schaltsignal 14 den vierten Schalteranschluss 19 entweder mit dem fünften Schalteranschluss 23 oder mit dem sechsten Schalteranschluss 24 verbindet.

Der Schalter 13 umfasst ferner einen siebten Schalteranschluss 20, der mit dem dritten Messeingang 17 verbunden ist, einen achten Schalteranschluss 25, der mit dem dritten Messanschluss 31 verbunden ist, und einen neunten Schalteranschluss 26, der mit dem vierten Widerstandsanschluss W4 verbunden ist. Der Schalter 13 ist so gestaltet, dass er abhängig von dem Schaltsignal 14 den siebten Schalteranschluss 20 entweder mit dem achten Schalteranschluss 25 oder mit dem neunten Schalteranschluss 26 verbindet.

Die Schaltvorgänge sind gekoppelt, d.h. der Schalter 13 verbindet entweder den ersten Schalteranschluss 18 mit dem zweiten Schalteranschluss 21 und den vierten Schalteranschluss 19 mit dem fünften Schalteranschluss 23 und den siebten Schalteranschluss 20 mit dem achten Schalteranschluss 25, so dass die Messanschlüsse 29, 30 und 31 mit den Messeingängen 15, 16 und 17 verbunden sind, oder der Schalter 13 verbindet den ersten Schalteranschluss 18 mit dem dritten Schalteranschluss 22 und den vierten Schalteranschluss 19 mit dem sechsten Schalteranschluss 24 und den siebten Schalteranschluss 20 mit dem neunten Schalteranschluss 26, so dass die Widerstandsanschlüsse W1, W2, W3 und W4 mit den Messeingängen 15, 16 und 17 verbunden sind. In der einen Schalterposition werden also die Widerstände 32, 33 des Rohres 1 und in der anderen Schalterposition die Referenzwiderstände 27 und 28 gemessen. In der Schalterposition, in der die Referenzwiderstände 27 und 28 gemessen werden, ist das Rohr 1 vollständig galvanisch von der Widerstandmesseinheit 11 getrennt. Die Umschaltung auf die Referenzwiderstände bietet damit auch eine sogenannte Freischaltung des Rohres 1, was für Wartungsarbeiten sehr wertvoll ist.

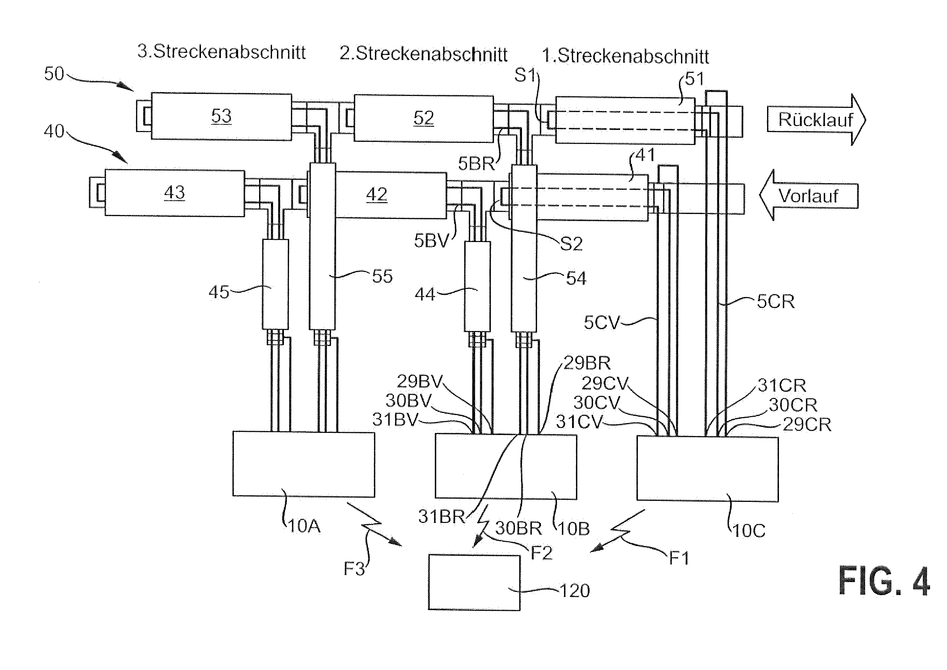

Figur 4 zeigt schematisch den Einsatz einer Mehrzahl von Leckage-Überwachungsvorrichtungen 10A, 10B und 10C zur Überwachung eines größeren in Streckenabschnitte eingeteilten Fernwärmerohres. Es sind parallel zwei Rohre 40, 50 geführt. Rohr 40 dient dem Vorlauf, d.h. dem Transport des Wärmemediums zum Abnehmer. Rohr 50 dient dem Rücklauf, d.h. dem Transport des in der Regel abgekühlten Wärmemediums vom Abnehmer weg. In Figur 4 sind ein 1., ein 2. und ein 3. Streckenabschnitt gezeigt.

Im 1. Streckenabschnitt liegen ein Rohrabschnitt 41 für den Vorlauf und ein Rohrabschnitt 51 für den Rücklauf. Im 2. Streckenabschnitt liegen ein Rohrabschnitt 42 für den Vorlauf und ein Rohrabschnitt 52 für den Rücklauf. Im 3. Streckenabschnitt liegen ein Rohrabschnitt 43 für den Vorlauf und ein Rohrabschnitt 53 für den Rücklauf.

Die Leckage-Überwachungsvorrichtung 10C ist zur Überwachung des 1. Streckenabschnitts, d.h. der Rohrabschnitte 41 und 51 vorgesehen. Bei beiden Rohrabschnitten sind elektrische Leiter bzw. Drähte in der Isolierung verlegt, wie mit Bezug auf Figuren 1 und 2 bereits ausführlich erläutert. Die Drahtenden sind in Figur 4 auf der rechten Seite der Rohrabschnitte 41, 51 zur Leckage-Überwachungsvorrichtung geführt. Am Übergang zum zweiten Streckenabschnitt sind die Drähte bei S1, S2 zu einer Drahtschleife 5CR bzw. 5CV verbunden. Die Leckage-Überwachungsvorrichtung 10C weist Messanschlüsse 29CR, 30CR und 31CR auf, an die die Anschlüsse der Drahtschleife 5CR und das Innenrohr des Rücklauf-Rohrabschnitts 51 angeschlossen sind. Die Leckage-Überwachungsvorrichtung 10C weist ferner Messanschlüsse 29CV, 30CV und 31 CV auf, an die die Anschlüsse der Drahtschleife 5CV und das Innenrohr des Vorlauf-Rohrabschnitts 41 angeschlossen sind. Die Leckage-Überwachungsvorrichtung 10C umfasst zwei Messeinheiten 9, wie in Figur 3 dargestellt, mit denen getrennt die Widerstände der beiden Rohrabschnitte 41, 51 gemessen werden.

Die Leckage-Überwachungsvorrichtung 10C kann über ein Funksignal F1 mit einer übergeordneten Einheit 120 in Verbindung stehen. Die übergeordnete Einheit 120 kann bei dem Betreiber des Fernwärmenetzes stehen.

Die Leckage-Überwachungsvorrichtung 10B ist zur Überwachung des 2. Streckenabschnitts, d.h. der Rohrabschnitte 42 und 52 vorgesehen. Bei beiden Rohrabschnitten sind wiederum elektrische Leiter bzw. Drähte in der Isolierung verlegt, wie mit Bezug auf Figuren 1 und 2 bereits ausführlich erläutert. Die Drahtenden sind in Figur 4 auf der rechten Seite der Rohrabschnitte 42, 52 zur Leckage-Überwachungsvorrichtung 10B geführt. Im Gegensatz zu der Anordnung für die Leckage-Überwachungsvorrichtung 10C, ist die Leckage-Überwachungsvorrichtung 10B am Ort eines Verbrauchers angeordnet, zu dem Abzweigerohre 44 und 54 führen. Die Drähte, die in den Rohrabschnitten 42 und 52 geführt sind, sind zunächst mit den in den Abzweigerohren 44 und 54 geführten Drähten verbunden. Deren freie Enden sind zur Leckage-Überwachungsvorrichtung 10B geführt. Leckage-Überwachungsvorrichtung 10B überwacht also sowohl die Rohre 42 und 52 als auch die Rohre 44 und 54. Am Übergang zum dritten Streckenabschnitt sind die Drähte in den Rohrabschnitten 42 und 52 zu einer Drahtschleife 5BR bzw. 5BV verbunden. Die Leckage-Überwachungsvorrichtung 10B weist Messanschlüsse 29BR, 30BR und 31 BR auf, an die die Anschlüsse der Drahtschleife 5BR angeschlossen sind sowie das Innenrohr des Rücklauf-Rohrabschnitts 52 über das Innenrohr des Abzweigerohres 54. Das heißt, auch die beiden Innenrohre der Rohre 52 und 54 sind elektrisch leitend miteinander verbunden. Die Leckage-Überwachungsvorrichtung 10B weist ferner Messanschlüsse 29BV, 30BV und 31 BV auf, an die die Anschlüsse der Drahtschleife 5BV und die miteinander verbundenen Innenrohr des Vorlauf-Rohrabschnitts 42 und des Abzweigerohres 44 angeschlossen sind. Die Leckage-Überwachungsvorrichtung 10B umfasst ebenfalls zwei Messeinheiten 9, wie in Figur 3 dargestellt, mit denen getrennt die Widerstände der beiden Rohrabschnitte 42 mit 44 und 52 mit 54 gemessen werden.

Die Leckage-Überwachungsvorrichtung 10B kann ebenfalls über ein Funksignal F2 mit der übergeordneten Einheit 120 in Verbindung stehen.

In einer nicht dargestellten Ausführungsform sind die Leckage-Überwachungsvorrichtungen 10B und 10C zu einer Leckage-Überwachungsvorrichtung zusammengefasst, die vier Messeinheiten 9 umfasst. Diese zusammengefasste Leckage-Überwachungsvorrichtung 10 könnte am Ort der Leckage-Überwachungsvorrichtung 10B installiert werden. Die in den Rohrabschnitten 41 und 51 durchgeführten Überwachungsdrähte müssten dann auf der in Figur 4 rechten Seite der Rohrabschnitte 41 und 51 jeweils zu einer Schleife verbunden werden. Auf der in Figur 4 linken Seite der Rohrabschnitte 41 und 51 werden die Drahtenden dann zur zusammengefassten Leckage-Überwachungsvorrichtung 10 geführt. Die zusammengefasste Leckage-Überwachungsvorrichtung weist dann natürlich insgesamt 12 Messanschlüsse auf.

Der dritte Streckenabschnitt wird entsprechend mit einer Leckage-Überwachungsvorrichtung 10A überwacht, die nicht näher erläutert wird. Dadurch, dass alle drei Leckage-Überwachungsvorrichtungen über Funk mit einer zentralen Einheit 120 in Verbindung stehen, kann eine zentrale Auswertung der Messergebnisse erfolgen.

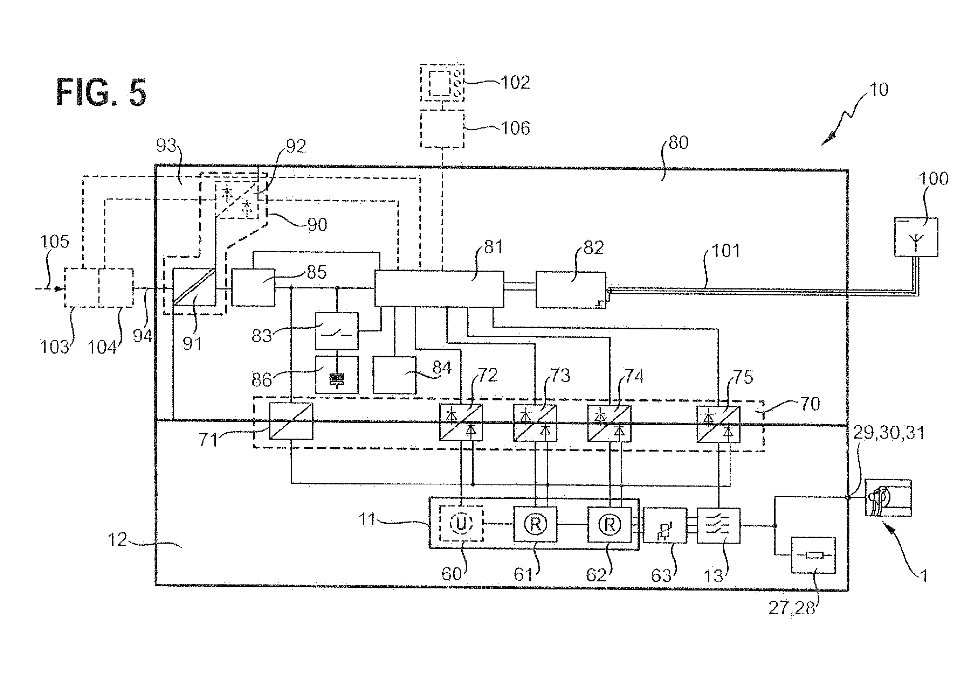

Figur 5 zeigt ein Blockschaltbild einer Ausführungsform einer erfindungsgemäßen Leckage-Überwachungsvorrichtung 10, die eine Messeinheit 12, eine Auswerteeinheit 80 sowie eine Spannungsversorgung 93 umfasst.

Die Messeinheit 12 wurde bereits mit Bezug auf Figur 3 ausführlich erläutert. In Figur 5 ist rein schematisch das zu überwachende Rohr 1 angedeutet, das über Messanschlüsse 29, 30 und 31 mit der Messeinheit 12 verbunden ist. Auch die Referenzwiderstände 27 und 28 sind rein schematisch als Block dargestellt, ebenso wie Schalter 13. Zwischen Schalter 13 und Widerstandsmesseinheit 11 kann optional ein Spannungsbegrenzer 63 geschaltet sein, um die Widerstandsmesseinheit 11 vor Überspannungen, z.B. hervorgerufen durch elektromagnetische Störungen im Bereich des Fernwärmerohrs, zu schützen. Neben einem Widerstandsmesser 61 für eine Messung des Schleifenwiderstands und einem Widerstandsmesser 62 für eine Messung des Isolationswiderstands kann die Widerstandsmesseinheit optional auch einen Spannungsmesser umfassen. Hiermit kann beispielsweise eine durch den Batterieeffekt bei feuchter Wärmeisolierung hervorgerufene Spannung erfasst werden.

Die von den Widerstandsmessern 61 und 62 und gegebenenfalls vom Spannungsmesser 60 erfassten Messwerte werden über Optokoppler 72, 73 und 74 an die Auswerteeinheit 80 übergeben. Ein von der Auswerteeinheit 80 abgegebenes Schaltsignal für Schalter 13 wird über einen Optokoppler 75 an die Messeinheit 12 übergeben. Ein Spannungswandler 71, der eine Spannungswandlung von beispielsweise 24 Volt Gleichspannung auf ± 15 Volt Gleichspannung vornimmt, ist als Trennwandler ausgeführt. Damit stellen Optokoppler 72, 73, 74 und 75 zusammen mit Trennwandler 71 eine Vorrichtung 70 zur galvanischen Trennung zwischen der Messeinheit 12 und der Auswerteeinheit 80 bereit.

In Figur 5 ist lediglich eine Messeinheit 12 dargestellt. Es sollte klar sein, dass mehrere Messeinheiten 9 vorhanden sein können, die dann jeweils separat die Komponenten aufweisen, die in Figur 5 für eine Messeinheit 12 dargestellt sind. Wie in Bezug auf Figur 4 erläutert, sind insbesondere zwei Messeinheiten 9 für die Überwachung von Vorlauf und Rücklauf eines Streckenabschnitts vorteilhaft, sowie vier Messeinheiten 9 für die gleichzeitige Überwachung von Vorlauf und Rücklauf von zwei benachbarten Streckenabschnitten. Auch wenn vier Messeinheiten 9 vorgesehen sind, genügt für die Auswertung eine Auswerteeinheit 80, die nachstehend beschrieben wird.

Die Auswerteeinheit 80 umfasst eine Steuereinheit 81, die als Mikroprozessor ausgeführt sein kann. Die Steuereinheit 81 ist über eine Datenleitung, beispielsweise einen CAN-Bus mit einem Block 82 verbunden, der eine Speichereinheit und ein Funkmodul repräsentiert. Die Speichereinheit 82 kann als Datenlogger ausgeführt sein, d.h. selbst über Rechenkapazitäten verfügen. Das Funkmodul 82 kann ein Empfangen und/oder Senden von Daten über ein Mobilfunknetz erlauben, insbesondere über ein Netz nach dem GSM-Standard (Global System for Mobile Communications). Das Funkmodul 82 kann hierfür über einen Aufnahmeschlitz zum Einführen einer sogenannten SIM-Karte (Subscriber Identity Module) verfügen, die Zugang zu einem Mobilfunknetz gewährt.

Die Speichereinheit 82 umfasst vorzugsweise einen Ringspeicher, d.h. einen Speicher, der, wenn er gefüllt ist, jeweils die ältesten Daten verwirft und dafür neue Daten aufnehmen kann. Das Speichervolumen kann auf die Aufnahme von Daten einer gewissen Zeitspanne ausgelegt sein, beispielsweise für eine Woche, zwei Wochen oder auch einen Monat. Die Speichereinheit 82 ist über eine geschirmte Leitung 101 mit einer Antenne 100 verbunden. Die Schirmung der Leitung ist geerdet, sie liegt auf dem Erdpotential der Antenne.

Die Steuereinheit 81 ist mit den Optokopplern 72, 73 und 74 verbunden, d.h. dass die Steuereinheit 81 die Messdaten der Widerstandsmesser 61 und 62 und des Spannungsmessers 60 empfängt. Die Steuereinheit 81 gibt ferner ein Schaltsignal über den Optokoppler 75 an den Schalter 13. Die Steuereinheit 81 kann einen Timer umfassen und selbst, z.B. Timer-gesteuert, das Schaltsignal generieren. Sie kann aber auch über die Antenne 100 und Block 82 ein Schaltsignal empfangen und an Schalter 13 weiterleiten.

Die Auswerteeinheit 80 umfasst ferner einen Akku 86, der über einen Schalter 83 permanent an einen Spannungsversorgungseingang der Steuereinheit 81 gekoppelt ist und über das Spannungsversorgungsnetz geladen wird. Damit ist eine Notspannungsversorgung gewährleistet, falls das Spannungsversorgungsnetz ausfällt. Eine Batterie/Akku-Überwachung in der Steuereinheit 81 gibt ein Signal für den Schalter 83 zum Abtrennen des Akkus, falls die Akkuspannung eine festgelegte Batterie-/bzw. Akkuunterspannung unterschreitet, um eine Beschädigung des Akkus zu vermeiden. Vor der Abschaltung wird eine Störmeldung über SMS abgesetzt. Eine Einheit 85 erkennt die Spannungsversorgung aus dem Spannungsversorgungsnetz und meldet gegebenenfalls einen Netzausfall an die Steuereinheit 81. Netzausfälle werden in der Speichereinheit 82 dokumentiert und bei einem Datenabruf über das Funkmodul 82 an die übergeordnete Einheit abgesetzt. Die Auswerteeinheit 80 umfasst eine Schnittstelle zum Anschluss eines Datensichtgerätes, beispielsweise eines Bildschirms 102. Eine Einheit 106 stellt einen CAN-Bus/USB Converter dar (auch CAN-Bus/RS232 Converter). Diese wird bei Verwendung eines handelsüblichen PC oder Laptop 102 zur Anpassung der Schnittstellen benötigt. Die Einheit 106 kann entfallen, wenn ein CAN-Bus fähiges Terminal verwendet wird.

Die Auswerteeinheit 80 wird in der Regel über eine Spannungsversorgungseinheit 93 an ein Spannungsnetz, z. B. ein 240 Volt/ 50 Hertz Wechselspannungsnetz angeschlossen. Der Anschluss kann über eine Sicherung 103 und einen Stromzähler 104 erfolgen. Zwischen der Spannungsversorgung, die an der Erde des Spannungsnetzes geerdet ist, und der Auswerteeinheit ist ein Gleichrichter 91 vorgesehen, der als Trennrichter mit Schutztrennung ausgeführt ist und gleichzeitig das Batterielademanagement übernimmt, und ein Optokoppler 92, über den der optionale Zähler ebenfalls mit Schutztrennung zum versorgenden Netz ausgeführt ist. Die Zählerstände werden über diese Schnittstelle der Steuereinheit 81 zugeführt und über das Funkmodul ausgelesen. Die optionale Sicherung 103 verfügt über einen potentialfreien Kontakt mit Schutztrennung, dieser ist an die Steuereinheit 81 angekoppelt. Bei einem Ausfall oder manuellem Ausschalten der Sicherung erfolgt eine Meldung über das Funkmodul. Damit sind die Spannungsversorgungseinheit 93 und die Auswerteeinheit 80 galvanisch voneinander getrennt.

Die galvanische Trennung zwischen den verschiedenen Komponenten ist wichtig, da über Kriechströme die Messwerte verfälscht werden können und Ausgleichströme zwischen Rohrleitungsnetz und Schutzleiteranschluss des versorgenden Netzes bei indirekten Blitzeinwirkungen Größen annehmen können, die bis zur Zerstörung des Gerätes und der angeschlossenen Leitungen führen können. Die Messung des Isolationswiderstandes und des Schleifenwiderstandes unterliegt vielfältigen weiteren Einflüssen, die unter anderem darin begründet liegen, dass die Fernwärmerohre in der Erde verlegt sind. Um zuverlässige Aussagen über etwaige Lecks machen zu können, ist eine hohe Messsicherheit entscheidend.

Die Steuereinheit 81 ist so ausgelegt, dass sie in vorbestimmbaren Zeitabständen die gemessenen Widerstandswerte des Isolationswiderstands und gegebenenfalls des Schleifenwiderstands speichert. Ferner kann sie die von der Widerstandsmesseinheit 11 gemessenen Widerstandsmesswerte in vorgegebenen Zeitabständen auswerten und Widerstandsmesswerte verwerfen, die außerhalb eines ersten vorgegebenen Werteintervalls liegen. Das erste vorgegebene Werteintervall ist sehr weit, es dient dazu sogenannte Ausreißer zu erfassen, d.h. Werte, die weit abseits der zu erwartenden Messergebnisse liegen und durch externe kurzfristige Störungen hervorgerufen sind. Derartige nicht-plausible Messwerte werden verworfen.

Aus einer wählbaren Anzahl nicht verworfener Messwerte wird ein Mittelwert gebildet. Beispielsweise werden jeweils 10 aufeinanderfolgende Messwerte gemittelt. Das gilt sowohl für den Schleifenwiderstand als auch für den Isolationswiderstand. Es ist ein zulässiges Widerstandswerteintervall sowohl für den Isolationswiderstand als auch für den Schleifenwiderstand definiert. Liegt der Mittelwert außerhalb des Widerstandswerteintervalls, wird in der beschriebenen Ausführungsform ein Schaltsignal für eine Umschaltung des Schalters 13 abgegeben, so dass eine Messung der Referenzwiderstandswerte 27 und 28 erfolgt. Damit wird überprüft, ob ein Fehler in der Messeinheit vorliegt. Ergibt die Messung, dass die Messeinheit fehlerfrei funktioniert, wird über das Funkmodul 82 und die Antenne 100 ein Signal abgegeben, dass einen fehlerhaften Wert bei der Widerstandsmessung signalisiert. Ergibt die Messung der Referenzwiderstandswerte 27 und 28, dass ein Fehler der Messeinheit vorliegt, wird ein Signal abgegeben, das eine fehlerhafte Messeinheit signalisiert. Die Signale können in Form einer SMS abgegeben werden. Der außerhalb des zulässigen Widerstandswerteintervalls liegende Messwert wird im Speicher 82 gespeichert, wenn kein Fehler der Messeinheit vorliegt. Widerstandsmittelwerte, die innerhalb des zweiten vorgegebenen Werteintervalls, d.h. dem zulässigen Widerstandswerteintervall liegen, werden ebenfalls im Speicher 82 gespeichert.

In einer Ausführungsform gibt die Steuereinheit 81 in regelmäßigen Abständen ein Schaltsignal an den Schalter 13, bzw. an die Schalter 13, wenn mehrere Messeinheiten 9 vorhanden sind, ab, so dass regelmäßig ein Selbsttest durch Messung der Referenzwiderstände 27 und 28 erfolgt. Auch hier kann bei entsprechenden Messwerten das Aussenden eines Funksignals erfolgen, das eine fehlerhafte Messeinheit signalisiert.

Das Speicher- und Funkmodul 82 kann in regelmäßigen Abständen die gespeicherten Messwerte über das Mobilfunknetz an eine übergeordnete Einheit senden. Das Speicher-und Funkmodul kann auch auf Anforderung über Funk die Messwerte abgeben. Die gespeicherten Messwerte können auch auf einem angeschlossenen Bildschirm 102 angezeigt werden.

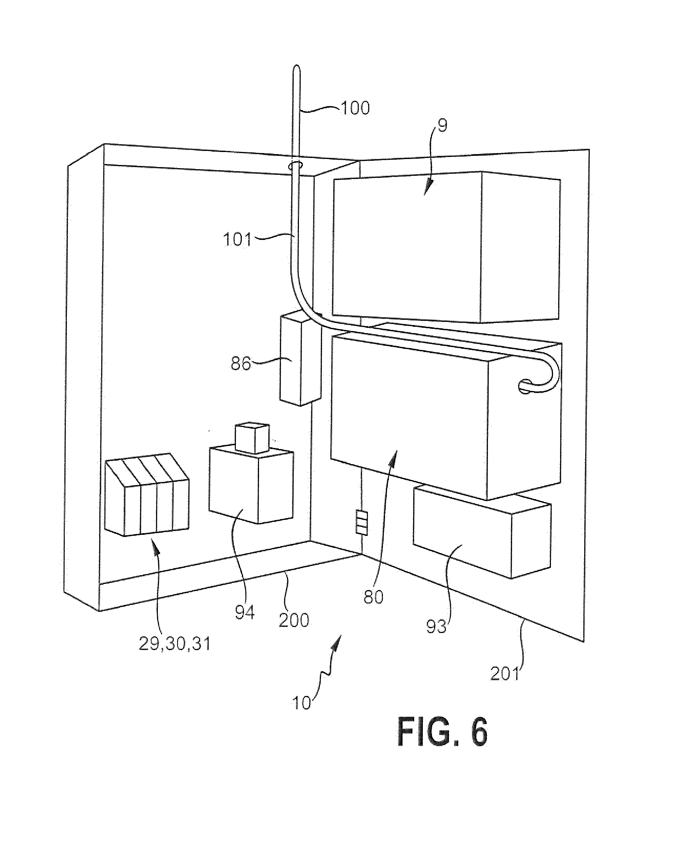

Figur 6 zeigt einen möglichen konstruktiven Aufbau einer erfindungsgemäßen Leckage-Überwachungsvorrichtung 10. In einem schrankartigen Gehäuse 200 mit einer Tür 201 sind die Messanschlüsse 29, 30 und 31 untergebracht. Verbindungsdrähte zu dem oder zu den zu überwachenden Fernwärmerohren werden an diesen fest elektrisch leitend angeschlossen. Über den Netzanschluss 94 kann die Leckage-Überwachungsvorrichtung 10 mit einer Versorgungsspannung, z. B. über das ortsübliche Spannungsversorgungsnetz versorgt werden. Für den Fall eines Spannungsausfalls ist die Batterie 86 vorgesehen.

Die Messeinheit 12, bzw. die Messeinheiten 12 sind in einem Gehäuse getrennt von der Auswerteeinheit 80 untergebracht, die ebenfalls ein separates Gehäuse aufweist. In einem weiteren Gehäuse befindet sich die Spannungsversorgungseinheit 93. Während in Figur 6 allgemein die Verkabelung innerhalb des Schrankes für eine bessere Übersichtlichkeit nicht dargestellt ist, ist eine geschirmte Zuleitung 101 angedeutet, die zur Antenne 100 führt, die an der Außenseite des schrankartigen Gehäuses 200 montiert ist.

Das geschlossene Gehäuse 200 sichert die Leckage-Überwachungsvorrichtung 10 vor Umwelteinflüssen und gegen unbefugten Zugriff und kann so bei Endkunden installiert werden, wobei der Betreiber des Fernwärmenetzes ständig auf die Messwerte zugreifen kann und eine dauerhafte Überwachung gewährleistet ist.

Es wird abschließend noch einmal darauf hingewiesen, dass es sich bei der vorhergehend detailliert beschriebenen Leckage-Überwachungsvorrichtung 10 lediglich um ein Ausführungsbeispiel handelt, welche vom Fachmann in verschiedenster Weise modifiziert werden kann, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriff "Einheit" und "Modul" nicht aus, dass die betreffenden Komponenten aus mehreren zusammenwirkenden Teil-Komponenten bestehen, die gegebenenfalls auch räumlich verteilt sein können.

## Patentansprüche

1. Leckage-Überwachungsvorrichtung (10) zur dauerhaften Verbindung mit einem wärmeisolierten Fernwärmerohr (1), in dem zwei elektrische Leiter (5) in Längsrichtung des Rohres in der Wärmeisolierung eingelassen sind, mit einer Messeinheit (9), die folgendes umfasst:
- einen ersten Messanschluss (29), an den ein metallisches Innenrohr (4) des Fernwärmerohrs anschließbar ist,
- einen zweiten Messanschluss (30), an den ein erstes Ende (6) eines ersten elektrischen Leiters der zwei elektrische Leiter anschließbar ist,
- einen elektrischen Referenzisolationswiderstand (27) mit einem ersten Widerstandsanschluss (W1) und einem zweiten Widerstandsanschluss (W2),
- eine elektrische Widerstandsmesseinheit (11) mit einem ersten Messeingang (15) und einem zweiten Messeingang (16), und
- einen fernbedienbaren Schalter (13) zum wahlweisen Ankoppeln des Referenzisolationswiderstandes (27) oder des ersten Messanschlusses (29) und des zweiten Messanschlusses (30) an die Widerstandsmesseinheit (11).

2. Leckage-Überwachungsvorrichtung (10) nach Anspruch 1, wobei die Messeinheit (9) ferner umfasst:
- einen dritten Messanschluss (31), an den ein zweites Ende (7) des zweiten elektrischen Leiters der zwei elektrische Leiter anschließbar ist,
- einen Referenzschleifenwiderstand (28) mit einem dritten Widerstandsanschluss (W3) und einem vierten Widerstandsanschluss (W4), wobei der fernbedienbare Schalter (13) wahlweise die beiden Referenzwiderstände (27, 28) oder die drei Messanschlüsse (29, 30, 31) an die Widerstandsmesseinheit (11) ankoppelt.

3. Leckage-Überwachungsvorrichtung (10) nach einem der vorangegangenen Ansprüche, wobei die Widerstandsmesseinheit (11) vollständig galvanisch von den zwei oder drei Messanschlüssen (29, 30, 31) getrennt ist, wenn der oder die Referenzwiderstände (27, 28) über den Schalter (13) an die Widerstandsmesseinheit (11) angekoppelt ist/sind.

4. Leckage-Überwachungsvorrichtung (10) nach einem der vorangegangenen Ansprüche, umfassend eine Mehrzahl, insbesondere bis zu vier, Messeinheiten (9), die eine gleichzeitige Überwachung von einer Mehrzahl, insbesondere bis zu vier wärmeisolierten Fernwärmerohren (1) ermöglichen.

5. Leckage-Überwachungsvorrichtung (10) nach einem der vorangegangenen Ansprüche, ferner umfassend:
- eine Auswerteeinheit (80) zum Verarbeiten von Widerstandsmessergebnissen, die von der Widerstandsmesseinheit (11) gemessen wurden, wobei die Auswerteeinheit insbesondere die Widerstandsmessergebnisse von einer Mehrzahl von Messeinheiten (9) bearbeiten kann.

6. Leckage-Überwachungsvorrichtung (10) nach Anspruch 5, wobei die Auswerteeinheit (80) ein Funkmodul (82) umfasst, welches ein Empfangen und/oder Senden von Daten nach einem Mobilfunkstandard, insbesondere nach einem Kurznachrichtendienst-Standard, erlaubt.

7. Leckage-Überwachungsvorrichtung (10) nach einem der Ansprüche 5 und 6, wobei die Auswerteeinheit (80) ein Steuersignal zum Steuern des Schalters (13) abgeben kann.

8. Leckage-Überwachungsvorrichtung (10) nach einem der Ansprüche 5 bis 7, ferner umfassend eine Vorrichtung (70) zur galvanischen Trennung zwischen der oder den Messeinheiten (9) und der Auswerteeinheit (80).

9. Leckage-Überwachungsvorrichtung (10) nach einem der Ansprüche 5 bis 8, ferner umfassend eine Vorrichtung (90) zur galvanischen Trennung zwischen der Auswerteeinheit (80) und einem Spannungsversorgungsanschluss (93).

10. Leckage-Überwachungsvorrichtung (10) nach einem der Ansprüche 5 bis 9, wobei die Auswerteeinheit (80) so gestaltet ist, dass sie die von der Widerstandsmesseinheit gemessenen Widerstandsmesswerte in vorgegebenen Zeitabständen auswertet und Widerstandsmesswerte verwirft, die außerhalb eines ersten vorgegebenen Werteintervalls liegen.

11. Leckage-Überwachungsvorrichtung (10) nach einem der Ansprüche 5 bis 10, wobei die Auswerteeinheit (80) so gestaltet ist, dass sie aus einer vorgebbaren Anzahl von gegebenenfalls nicht verworfenen Widerstandsmesswerten einen Widerstandsmittelwert bildet und in einem Speicher abspeichert.

12. Leckage-Überwachungsvorrichtung (10) nach Anspruch 11, wobei die Auswerteeinheit (80) so gestaltet ist, dass sie ein Schaltsignal an den Schalter 13 abgibt, wenn der Widerstandsmittelwert außerhalb eines zweiten vorgegebenen Werteintervalls liegt, das kleiner ist, als das erste vorgegebene Werteintervall, und eine Messung des oder der Referenzwiderstände (27, 28) durchgeführt wird, wobei eine Funknachricht, insbesondere eine SMS, ausgesendet wird, wenn die Referenzmesswerte innerhalb eines vorgegebenen Referenzwerteintervalls liegen.

13. Verfahren zur Leckage-Überwachung in einem wärmeisolierten Fernwärmerohr (1), in dem zwei elektrische Leiter (5) in Längsrichtung des Rohres in der Wärmeisolierung eingelassen sind, umfassend:
- Messen eines elektrischen Widerstands zwischen einem ersten der zwei elektrischen Leiter (5) und einem metallischen Innenrohr (4) des wärmeisolierten Fernwärmerohrs (1),
- Umschalten auf einen elektrischen Referenzisolationswiderstand (27) in vorgegebenen zeitlichen Abständen und/oder wenn ein Widerstandswert gemessen wurde, der von einem erwarteten Messergebnis abweicht, und
- Messen des Referenzisolationswiderstands (27).
